# EUROPÄISCHE PATENTANMELDUNG

(11) **EP 3 375 985 A1**
(43) Veröffentlichungstag der Anmeldung: **19.09.2018**
(21) Anmeldenummer: 17161048.8
(22) Anmeldetag: 15.03.2017
(51) Int. Cl.: F01D 25/24, F01D 25/32, F02C 9/18

(54) **INNENGEHÄUSESTRUKTUR MIT KONDENSATIONSKAMMER FÜR EINE DAMPFTURBINE**

(71) Anmelder: Siemens Aktiengesellschaft, 80333 München (DE)
(72) Erfinder: Bocska, Peter, 45481 Mülheim a.d. Ruhr (DE); Felwor, David, 46147 Oberhausen (DE); Hortig, Christian, 44149 Dortmund (DE)

(57) **Zusammenfassung**

Die Erfindung betrifft eine Innengehäusestruktur (24) für eine Niederdruck-Teilturbine (7), wobei zwischen einer ersten Anzapfkammer (35) und einer zweiten Anzapfkammer (36) eine Kondensationskammer (40) angeordnet wird, die mit Dampf aus der ersten Anzapfkammer (35) versorgt wird, wobei der Dampf in der Kondensationskammer (40) kondensiert und somit zu einer niedrigeren thermischen Belastung der Innengehäusestruktur (24) führt.

## Beschreibung

Die Erfindung betrifft eine Innengehäusestruktur für eine Dampfturbine, insbesondere Niederdruck-Teilturbine, wobei die Dampfturbine, insbesondere Niederdruck-Teilturbine einen Strömungskanal aufweist, wobei ein Strömungsmedium, insbesondere Dampf in einer Strömungsrichtung durch den Strömungskanal strömt, umfassend eine erste Anzapfkammer mit einer ersten Anzapfleitung zur Herstellung einer strömungstechnischen Verbindung zwischen der ersten Anzapfkammer und dem Strömungskanal, mit einer zweiten Anzapfkammer mit einer zweiten Anzapfleitung zur Herstellung einer strömungstechnischen Verbindung zwischen der zweiten Anzapfkammer und dem Strömungskanal, einer Trennwand, die die erste Anzapfkammer mit der zweiten Anzapfkammer trennt.

Desweiteren betrifft die Erfindung ein Verfahren zur Reduzierung von thermischen Spannungen in einer Dampfturbine, insbesondere Niederdruck-Teilturbine, wobei die Dampfturbine mit einer um einen Rotor angeordneten Innengehäusestruktur ausgebildet wird.

Der Dampfkraftwerksprozess eines Kraftwerkes gliedert sich grundsätzlich in drei Abschnitte: Verbrennung, Verdampfung und Umwandlung der aufgenommenen Wärme in mechanische Energie. Die in Brennstoffen gebundene chemische Energie wird möglichst vollständig in mechanische Energie umgewandelt. Je höher die Werte der Zustandsgrößen Druck und Temperatur bei der Verdampfung vorliegen, umso höher ist der Wirkungsgrad. Zur weiteren Erhöhung des Wirkungsgrads wird üblicherweise das Speisewasser vorgewärmt. Hierzu wird aus dem Strömungskanal einer Dampfturbine oder Verbindungsleitungen eine Teilmenge des Dampfes entnommen und auf mehrere Oberflächen- oder Mischvorwärmer geleitet.

Eine Niederdruck-Teilturbine umfasst im Wesentlichen einen drehbar gelagerten Rotor und ein um den Rotor angeordnetes Innengehäuse. Um das Innengehäuse ist ein Außengehäuse angeordnet. Das Innengehäuse umfasst im Wesentlichen Leitschaufelträger, die unmittelbar an den Strömungskanal angrenzen und zum Aufnehmen von Leitschaufeln ausgebildet sind. Zur Entnahme des Dampfes für die Vorwärmer wird der Leitschaufelträger an einer bestimmten axialen Position über dem Umfang angebohrt, so dass Dampf in eine außerhalb des Leitschaufelträgers liegende Anzapfkammer strömen kann. In alternativen Ausführungsformen kann statt einer Bohrung im Leitschaufelträger zwischen zwei unterschiedlichen Leitschaufelträgern ein Spalt eingestellt werden, durch den der Dampf in die Anzapfkammer strömen kann. Der in die Anzapfkammer einströmende Dampf wird in tangentialer Richtung zu einem Anschluss an die Vorwärmstrecke, die üblicherweise mittels einer oder zweier Rohrstutzen realisiert wird, beströmt.

Für einen hohen Wirkungsgrad des Kraftwerks ist es vorteilhaft, wenn mehrere Vorwärmer mit einer niedrigen Grädigkeit eingesetzt werden. Deshalb wird in einer insbesondere Niederdruck-Teilturbine Dampf mit unterschiedlichen Zustandsgrößen wie Druck und Temperatur entnommen.

Bei unmittelbar nebeneinander liegenden Anzapfkammern, in denen unterschiedliche Dampfzustände vorliegen, herrschen an den angrenzenden Bauteilen der Turbinen vergleichsweise hohe Temperaturgradienten. Dies führt einerseits zu thermischen Spannungen, was die Lebensdauer der Bauteile beeinflussen kann und andererseits führt dies dazu, dass die Bauteile sich verformen können und z. B. es zu einer Klaffung zwischen einem Oberteil und einem Unterteil eines Turbinengehäuses kommen kann.

Daher gibt es Bestrebungen, die maximale Temperaturdifferenz über eine Trennwand innerhalb einer Dampfturbine zu begrenzen. Allerdings ist es für die Vorwärmung vorteilhafter, wenn größere Temperaturdifferenzen realisiert werden können, da der Unterschied in zwei aufeinanderfolgenden Vorwärmern zu gering ausfallen muss, um die von der Turbine limitierten Temperaturdifferenzen einzuhalten.

An dieser Stelle setzt die Erfindung an. Es ist Aufgabe der Erfindung eine Dampfturbine, insbesondere Niederdruck-Dampfturbine anzugeben, bei der geringere thermische Spannungen zwischen zwei Anzapfkammern auftauchen.

Gelöst wird dies durch eine Innengehäusestruktur für eine Dampfturbine gemäß Anspruch 1 und ein Verfahren gemäß Anspruch 6.

Vorteilhafte Weiterbildungen sind in den Unteransprüchen angegeben.

Erfindungsgemäß wird demnach eine Innengehäusestruktur für eine Dampfturbine, insbesondere Niederdruck-Teilturbine, angegeben, wobei die Dampfturbine, insbesondere Niederdruck-Teilturbine, einen Strömungskanal aufweist, wobei ein Strömungsmedium, insbesondere Dampf in einer Strömungsrichtung durch den Strömungskanal strömt. Die Innengehäusestruktur umfasst eine erste Anzapfkammer mit einer ersten Anzapfleitung zur Herstellung einer strömungstechnischen Verbindung zwischen der ersten Anzapfkammer und dem Strömungskanal, ferner eine zweite Anzapfkammer mit einer zweiten Anzapfleitung zur Herstellung einer strömungstechnischen Verbindung zwischen der zweiten Anzapfkammer und dem Strömungskanal. Ferner umfasst die Innengehäusestruktur eine Trennwand, die die erste Anzapfkammer von der zweiten Anzapfkammer trennt. Die Innengehäusestruktur weist eine Kondensationskammer zwischen der ersten und zweiten Anzapfkammer auf, wobei die Kondensationskammer eine strömungstechnische Verbindung zur ersten Anzapfkammer aufweist.

Somit wird erfindungsgemäß vorgeschlagen an kritischen Stellen in der Dampfturbine, z. B. an der Innengehäusewand, dort wo benachbarte Anzapfkammern sich treffen und wo entsprechend hohe thermische Gradienten zu erwarten sind, eine zusätzliche Kondensationskammer einzuführen. Die erste Anzapfkammer wird mit Dampf aus dem Schaufelpfad versorgt. Es findet somit eine kontinuierliche Entnahme von Dampf aus dem Schaufelpfad statt, der dann über Rohre dem Vorwärmer zugeführt wird.

In die zweite Anzapfkammer strömt ein weiterer Dampf, jedoch ist der Druck und auch die Temperatur hier geringer als der Druck und die Temperatur des Dampfes, der in die erste Anzapfkammer strömt. Die angrenzenden Bauteile werden in diesem Bereich mit Dampf unterschiedlicher Temperatur beströmt, wodurch sich ein hoher thermischer Gradient im Turbinengehäuse ausbildet.

Erfindungsgemäß wird nun vorgeschlagen, die erste Anzapfkammer mit einer ersten strömungstechnischen Verbindung zum Strömungskanal zu versehen. Dadurch herrscht in der ersten Anzapfkammer der gleiche Druck wie in der strömungstechnischen Verbindung zum Strömungskanal. In die zweite Anzapfkammer strömt ein Dampf geringerer Temperatur und geringerem Druck. Die erste Anzapfkammer grenzt an der Kondensationskammer an. Da die Kondensationskammer an der zweiten Anzapfkammer mit niedriger Temperatur grenzt, wird der Dampf in der Kondensationskammer so weit abgekühlt, bis er anfängt an der kälteren Wand zu kondensieren. Die Menge an Dampf, die an der kalten Wand in der Kondensationskammer kondensiert, strömt aus der heißeren ersten Anzapfkammer nach. Erfindungsgemäß läuft das dadurch entstandene Kondensat ohne ein Druckgefälle, lediglich durch die Schwerkraft wieder zurück in die erste Anzapfkammer. Durch diesen Vorgang wird sich in der Kondensationskammer der gleiche Druck wie in der ersten Anzapfkammer und die korrespondierende Verdampftemperatur einstellen. Diese liegt zwischen den Temperaturen in der ersten Anzapfkammer und der zweiten Anzapfkammer.

Dadurch wird der thermische Gradient im Material weniger stark ausfallen, was zu einer Reduktion der Spannungen führt. Desweiteren werden unerwünschte Verformungen des Turbinengehäuses verhindert.

Das erfindungsgemäße Verfahren ist zur Reduzierung von thermischen Spannungen in einer Dampfturbine, insbesondere Niederdruck-Teilturbine, ausgebildet. Die Dampfturbine ist hierbei mit einer um den Rotor angeordneten Innengehäusestruktur ausgebildet. Erfindungsgemäß wird die Innengehäusestruktur mit einer ersten Anzapfkammer ausgebildet, die mit Dampf aus dem Strömungskanal beaufschlagt wird, wobei die Innengehäusestruktur mit einer zweiten Anzapfkammer ausgebildet wird, die mit Dampf aus dem Strömungskanal beaufschlagt wird, wobei der in die zweite Anzapfkammer einströmende Dampf in Strömungsrichtung gesehen nach der ersten Anzapfkammer angeordnet wird, wobei zwischen der ersten und zweiten Anzapfkammer eine Kondensationskammer angeordnet wird, die mit Dampf derart aus der ersten Anzapfkammer beaufschlagt wird, dass der Dampf in der Kondensationskammer kondensiert wird und das in der Kondensationskammer entstehende Kondensat in die erste Anzapfkammer rückgeführt, so dass dieser dort wieder zu Dampf umgewandelt werden kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine prinzipielle Darstellung eines Kraftwerkkreislaufs,
- Figur 2: eine Schnittdarstellung durch eine Innengehäusestruktur.

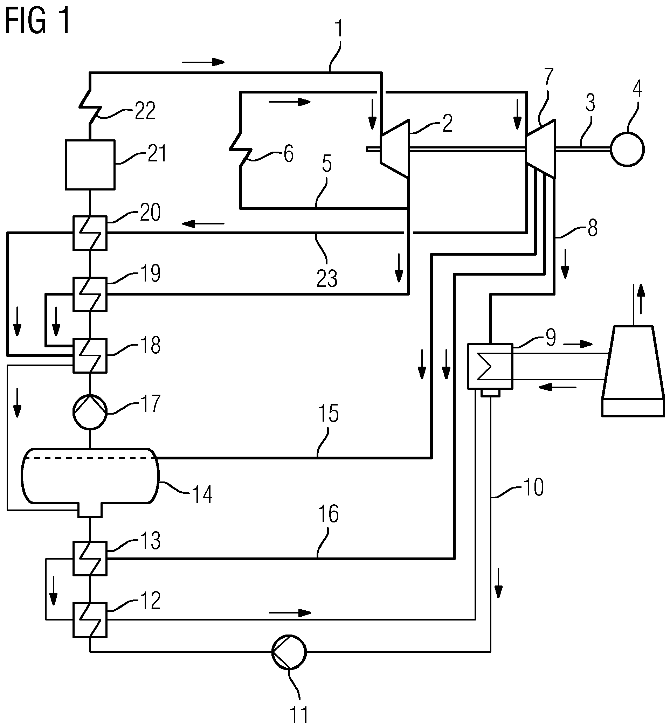

Die Figur 1 zeigt einen Dampfkreislaufprozess in einem Dampfkraftwerk. Ein Frischdampf 1 strömt in einer Hochdruck-Teilturbine 2. Die thermische Energie des Dampfes wird hierbei in Rotationsenergie eines Rotors auf eine Welle 3 übertragen, die schließlich einen Generator 4 antreibt. Der aus der Hochdruck-Teilturbine 2 ausströmende Dampf strömt zum Teil über eine kalte Zwischenüberleitung 5 zu einem Zwischenüberhitzer 6. Im Zwischenüberhitzer 6 wird der Dampf auf eine höhere Temperatur gebracht und in eine Mittel-/Niederdruckteilturbine 7 zugeführt. Der aus der Mitteldruck-/Niederdruckturbine 7 ausströmende Dampf 8 strömt zu einem Kondensator 9, wo der Dampf wieder zu Wasser kondensiert. Das Kondensat strömt über eine Leitung 10 zu einer Kondensatpumpe 11 und von dort zu einem ersten Niederdruckvorwärmer 12 und anschließend zu einem zweiten Niederdruckvorwärmer 13. Anschließend gelangt das Wasser zu einem Speisewasserbehälter 14. Der Niederdruckvorwärmer 13 und der Speisewasserbehälter 14 werden über Anzapfleitungen 15, 16 mit der Mitteldruck-/Niederdruckturbine 7 verbunden. Der aus der Mitteldruck-/Niederdruckturbine 7 ausströmende Anzapfdampf erwärmt den Niederdruckvorwärmer 13 und den Speisewasserbehälter 14. Das somit erwärmte Wasser gelangt über eine Speisewasserpumpe 17 zu einem ersten Hochdruckvorwärmer 18 und von dort zu einem zweiten Hochdruckvorwärmer 19. Anschließend gelangt das weiterhin erwärmte Wasser zu einem dritten Hochdruckvorwärmer 20. Nach dem Hochdruckvorwärmer gelangt das Wasser zu einem Kessel 21, wo das Wasser in Dampf umgewandelt wird und von dort zu einem Überhitzer 22. Der im Überhitzer 22 entstandene Dampf strömt als Frischdampf 1 zur Hochdruck-Teilturbine 2. Der Kreislauf ist somit geschlossen. Der zweite Hochdruckvorwärmer 19 wird strömungstechnisch mit dem Ausgang der Hochdruck-Teilturbine 2 verbunden, so dass das im zweiten Hochdruckvorwärmer 19 befindliche Wasser weiter erwärmt wird. Schließlich wird der dritte Hochdruckvorwärmer 20 mit einer weiteren Anzapfleitung 23 beströmt, die strömungstechnisch mit der Mitteldruck-/Niederdruck-Teilturbine 7 verbunden ist.

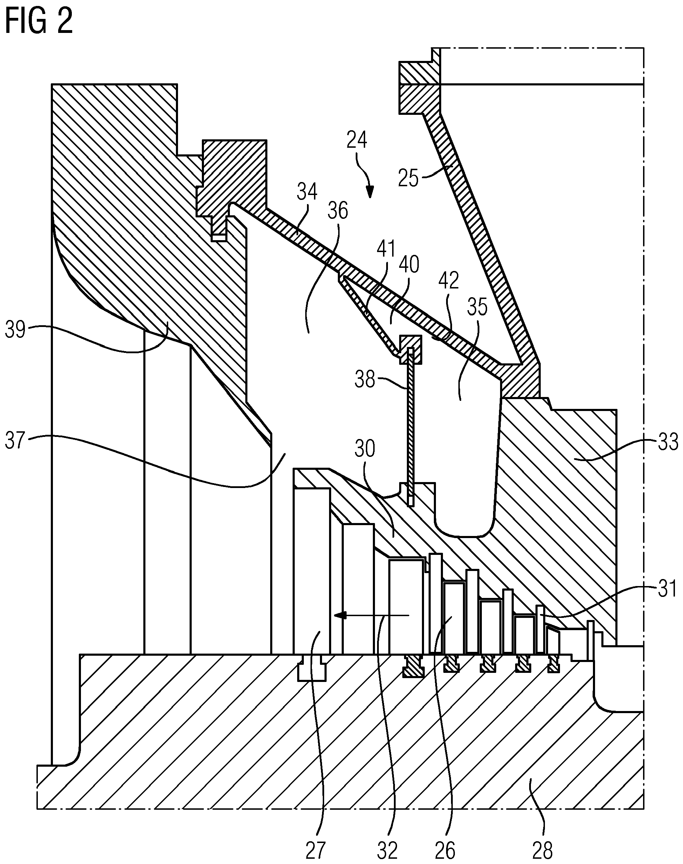

Die Figur 2 zeigt eine Schnittdarstellung durch eine erfindungsgemäße Innengehäusestruktur 24. Die Innengehäusestruktur 24 ist Teil einer Niederdruck-Teilturbine 7, die in der Figur 2 lediglich ausschnittsweise dargestellt ist. Über einen Einströmstutzen 25 strömt ein Dampf in einen Strömungskanal 26. Der Strömungskanal 26 wird gebildet zwischen einem mit Laufschaufeln 27 ausgebildeten Rotor 28 und mit Laufschaufeln 31 ausgebildeten Leitschaufelträger 30. Der Rotor 28 ist um eine Rotationsachse 29 drehbar gelagert. In der Figur 2 ist lediglich eine Laufschaufel mit dem Bezugszeichen 27 versehen. Der Strömungskanal 26 wird durch einen Leitschaufelträger 30 begrenzt, der Teil der Innengehäusestruktur 24 ist. Der Leitschaufelträger 30 ist mit Leitschaufeln 31 versehen, wobei in der Figur 2 lediglich eine Leitschaufel mit dem Bezugszeichen 31 versehen ist.

Eine thermische Energie des Dampfes wird im Strömungskanal 26 während der Durchströmung durch die Leitschaufel 31 und Laufschaufeln 27 in mechanische Energie des Rotors 28 umgewandelt. Der Dampf strömt hierbei in einer Strömungsrichtung 32, wobei die Temperatur und der Druck des Dampfes geringer wird. Der Leitschaufelträger 30 umfasst eine innere Begrenzung, die Teil des Einströmstutzens 25 ist. Die Innengehäusestruktur 24 wird durch eine äußere Innengehäusewand 34 begrenzt. Zwischen der Leitschaufelstruktur 30 und der äußeren Innengehäusewand 34 ist eine erste Anzapfkammer 35 und eine zweite Anzapfkammer 36 ausgebildet. Die erste Anzapfkammer 35 wird mit einem Dampf aus dem Strömungskanal 26 versorgt. Hierzu ist in der Innengehäusestruktur 24 eine nicht näher dargestellte strömungstechnische Verbindung zwischen der ersten Anzapfkammer 35 und dem Strömungskanal 26 ausgebildet.

In die zweite Anzapfkammer 36 strömt ein Dampf aus dem Strömungskanal 26 über eine strömungstechnische Verbindung 37. Der Druck des Dampfes, der über die strömungstechnische Verbindung 37 von dem Strömungskanal 26 in die zweite Anzapfkammer 36 strömt, ist geringer als der Druck des Dampfes, der in die erste Anzapfkammer 35 strömt. Genauso ist die Temperatur des Dampfes in der zweiten Anzapfkammer 36 geringer als die Temperatur des Dampfes in der ersten Anzapfkammer 35. Die erste Anzapfkammer 35 wird über eine Trennwand 38 von der zweiten Anzapfkammer 36 getrennt. Abströmungsseitig wird die Innengehäusestruktur 24 durch einen Leitschaufelkranz 39 begrenzt.

Die Innengehäusestruktur 24 umfasst desweiteren eine Kondensationskammer 40. Diese Kondensationskammer 40 umfasst eine Kondensationskammerwand 41 und ist einerseits mit der Trennwand 38 und mit der äußeren Innengehäusewand 34 verbunden. Die Trennwand 38 ragt an die Innengehäusewand 34, wobei zwischen der Trennwand 38 und der Innengehäusewand 34 ein Spalt 42 entsteht. Durch diesen Spalt 42 strömt der in der ersten Anzapfkammer 35 befindliche Dampf in die Kondensationskammer 40 hinein. Die thermodynamischen Größen sind hierbei derart gewählt, dass der in der Kondensationskammer 40 befindliche Dampf aufgrund der vergleichsweise kalten Kondensationskammerwand 41 kondensiert. Das in der Kondensationskammer 40 entstandene Kondensat wird hierbei gesammelt und der ersten Anzapfkammer 35 wieder rückgeführt, wo es wieder verdampft (nicht dargestellt). Die thermische Belastung der Trennwand 38 wird hierbei minimiert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Innengehäusestruktur (24) für eine Dampfturbine, insbesondere Niederdruck-Teilturbine (7),
wobei die Dampfturbine, insbesondere Niederdruck-Teilturbine (7) einen Strömungskanal (26) aufweist,
wobei ein Strömungsmedium, insbesondere Dampf (8) in einer Strömungsrichtung (32) durch den Strömungskanal (26) strömt,
umfassend
eine erste Anzapfkammer (35) mit einer ersten Anzapfleitung (15) zur Herstellung einer strömungstechnischen Verbindung (37) zwischen der ersten Anzapfkammer (35) und dem Strömungskanal (26),
mit einer zweiten Anzapfkammer (36) mit einer zweiten Anzapfleitung (16) zur Herstellung einer strömungstechnischen Verbindung (37) zwischen der zweiten Anzapfkammer (35) und dem Strömungskanal (26),
einer Trennwand (38), die die erste Anzapfkammer (35) mit der zweiten Anzapfkammer (36) trennt,
**gekennzeichnet durch** eine Kondensationskammer (40) zwischen der ersten (35) und zweiten Anzapfkammer (36), wobei die Kondensationskammer (40) eine strömungstechnische Verbindung (37) zur ersten Anzapfkammer (35) aufweist.

2. Innengehäusestruktur (24) nach Anspruch 1,
wobei die Innengehäusestruktur (24) eine zum Strömungskanal (26) hin aufweisende Leitschaufelträgerstruktur aufweist, die eine erste (35) und zweite Anzapfkammer (36) zum Strömungskanal (26) hin abgrenzt,
wobei die Innengehäusestruktur (24) eine äußere Innengehäusewand (34) aufweist, die gegenüberliegend zur Leitschaufelträgerstruktur eine Begrenzung der ersten (35) und zweiten Anzapfkammer (36) darstellt.

3. Innengehäusestruktur (24) nach Anspruch 1 oder 2, wobei die Kondensationskammer (40) eine Kondensationskammerwand (41) aufweist,
wobei zwischen der Kondensationskammerwand (41) und der äußeren Innengehäusewand (34) die Kondensationskammer (40) ausgebildet ist.

4. Innengehäusestruktur (24) nach einem der vorhergehenden Ansprüche,
wobei die strömungstechnische Verbindung (37) zwischen der Kondensationskammer (40) und der äußeren Innengehäusewand (34) durch einen Spalt (42) zwischen der Trennwand (38) und der äußeren Innengehäusewand (34) gebildet ist.

5. Innengehäusestruktur (24) nach einem der vorhergehenden Ansprüche,
wobei in Strömungsrichtung (32) gesehen die erste Anzapfkammer (35) vor der zweiten Anzapfkammer (36) angeordnet ist.

6. Verfahren zur Reduzierung von thermischen Spannungen in einer Dampfturbine, insbesondere Niederdruck-Teilturbine (7),
wobei die Dampfturbine mit einer um einen Rotor (28) angeordneten Innengehäusestruktur (24) ausgebildet wird, wobei die Innengehäusestruktur (24) mit einer ersten Anzapfkammer (35) ausgebildet ist, die mit Dampf aus dem Strömungskanal (26) beaufschlagt wird,
wobei die Innengehäusestruktur (24) mit einer zweiten Anzapfkammer (36) ausgebildet wird, die mit Dampf aus dem Strömungskanal beaufschlagt wird, wobei der in die zweite Anzapfkammer (36) einströmende Dampf in Strömungsrichtung (32) gesehen nach der ersten Anzapfkammer (35) angeordnet wird,
wobei zwischen der ersten (35) und zweiten Anzapfkammer (36) eine Kondensationskammer (40) angeordnet ist, die mit Dampf derart an der ersten Anzapfkammer (35) beaufschlagt wird, dass der Dampf in der Kondensationskammer (40) kondensiert und das in der Kondensationskammer (40) entstandene Kondensat in die erste Anzapfkammer (35) rückgeführt, so dass dieser dort wieder zu Dampf umgewandelt wird.

7. Verfahren nach Anspruch 6,
wobei eine Entwässerung vorgesehen wird, die in der ersten Kondensationskammer (40) entstandenes Kondensat abführt.
